# EUROPEAN PATENT APPLICATION

(11) **EP 1 533 216 A1**
(43) Date of publication of application: **25.05.2005**
(21) Application number: 04027334.4
(22) Date of filing: 17.11.2004
(51) Int. Cl.: B62J 11/00, B62J 6/00

(54) **Attachment apparatus**

(30) Priority: 21.11.2003 JP 2003391945
(71) Applicant: CATEYE Co., Ltd., Osaka-shi, Osaka 546-0041 (JP)
(72) Inventor: Ueda, Takashi, Izumi-shi, Osaka 594-1105 (JP)
(74) Representative: Hofer, Dorothea, Dipl.-Phys.

(57) **Abstract**

An attachment apparatus includes a target portion fixation member (1) fixed to a handlebar (35) with a bolt (6) and a part attachment member (2) fixed to the target portion fixation member. The part attachment member (2) has a portion contacting the target portion fixation member, and a pin (11) and an engagement hole member (12) located on one side and on the other side respectively so that the contacting portion lies therebetween The target portion fixation member has a contacted portion (15), and a hook member (13) and a protrusion (14) located on one side and on the other side respectively so that the contacted portion lies therebetween. At least one of the portion of the part attachment member contacting the target portion fixation member and the contacted portion of the target portion fixation member is provided with an elastic member (3) so as to contact with the other portion.

## Description

### BACKGROUND OF THE INVENTION

### Field of the Invention

The present invention relates to an attachment apparatus, and more particularly to an attachment apparatus for attaching a part to a target portion.

### Description of the Background Art

A variety of parts such as a headlamp or a speed meter are attached to a bicycle. With regard to an attachment apparatus for attaching a variety of parts, characteristics such as facilitated attachment of parts or ensured manner of maintaining an attached state even in the case of vibration during running are demanded. Meanwhile, with regard to the headlamp, for example, such a characteristic that a direction of light projection can readily be changed is demanded.

In order to fulfill the demands as described above, Japanese Patent Laying-Open No. 8-113175 discloses the following attachment apparatus. Here, the attachment apparatus includes three parts. A first part is fixed to a handlebar, and a second part is engaged such that it is pivotable in a prescribed range. A third part has a rail engagement member mounting a headlamp and engaged with a rail engagement member provided in the second part in a sliding manner. Engagement is thus achieved by means of these engagement members. According to this attachment apparatus, the headlamp is readily attached to a bicycle, and a stable and ensured attached state can be maintained.

On the other hand, in the attachment apparatus described above, the rails on which members are slid should be provided with high accuracy. In addition, the attachment apparatus has a complicated structure such as an engagement mechanism allowing pivoting only in a prescribed range. Moreover, relatively large number of operation steps are necessary for attachment. Therefore, a demand for an attachment apparatus having a more simplified structure, attaining lower manufacturing cost, and ensuring attachment in a more facilitated manner has grown.

### SUMMARY OF THE INVENTION

An object of the present invention is to provide an attachment apparatus having a more simplified structure, attaining lower manufacturing cost, and ensuring attachment in a more facilitated manner.

An attachment apparatus according to the present invention includes: a target portion fixation member fixed to a fixation target portion with a fastener; and a part attachment member having an attachment target part attached and fixed to the target portion fixation member. The part attachment member described above has a portion contacting the target portion fixation member, and a first engagement member and a second engagement member located on one side and on the other side respectively so that the contacting portion lies therebetween. The target portion fixation member has a contacted portion contacted by the target portion fixation member, and a third engagement member engaged with the first engagement member and a fourth engagement member engaged with the second engagement member that are located on one side and on the other side respectively so that the contacted portion lies therebetween. At least one of the portion of the part attachment member contacting the target portion fixation member and the contacted portion of the target portion fixation member is provided with an elastic member so as to contact with the other portion.

According to the structure described above, a repulsive force by the elastic member is applied to the target portion fixation member and the part attachment member in a direction apart from each other. On the other hand, engagement between the first engagement member and the third engagement member as well as engagement between the second engagement member and the fourth engagement member achieved on opposing sides of the elastic member are maintained in a stable manner by the repulsive force. In the attached state described above, while one engagement is maintained, the other engagement is achieved by pressing these members against each other, thereby enabling highly simplified attachment.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates an attachment apparatus in an embodiment of the present invention.
Fig. 2 is a perspective view of a part attachment member in the attachment apparatus in Fig. 1, viewed from below.
Fig. 3 is a perspective view of a target portion fixation member in the attachment apparatus in Fig. 1, when it is fixed to a handlebar.
Fig. 4 illustrates a procedure for fixing the part attachment member to the target portion fixation member in the attachment apparatus in Fig. 1.
Fig. 5 illustrates a mechanism for fixing the part attachment member to the target portion fixation member.
Fig. 6 illustrates one method of detaching the part attachment member from the target portion fixation member.
Fig. 7 is a cross-sectional view of a headlamp.
Fig. 8 illustrates a state in which the headlamp is attached to the part attachment member.
Fig. 9 is a cross-sectional view along the line IX-IX in Fig. 8.

### DESCRIPTION OF THE PREFERRED EMBODIMENTS

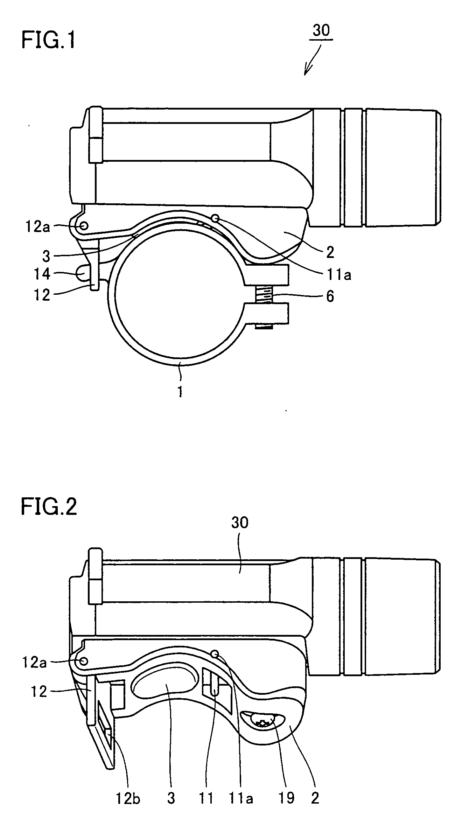

In the following, embodiments of the present invention will be described with reference to the figures. Fig. 1 shows an attachment apparatus in an embodiment of the present invention. Here, an attachment target portion is represented by a not-shown handlebar, and a part to be attached is represented by a headlamp 30. A target portion fixation member 1 is fastened to the handlebar by means of a bolt 6 serving as a fastener. Target portion fixation member 1 includes a hook member serving as a third engagement member not shown in Fig. 1 and a protrusion 14 serving as a fourth engagement member. A part attachment member 2 includes an end portion 11a of a pin serving as a first engagement member, a sheet elastic member 3, and an engagement hole member 12 serving as a second engagement member and attached in a pivotable manner to a pin shaft portion 12a.

Fig. 2 is a perspective view showing part attachment member 2 having headlamp 30 attached, viewed from below. Part attachment member 2 includes three main portions as described above. One of those main portions is sheet elastic member 3, which is disposed in a recessed portion in the center of part attachment member 2 along a surface of the recessed portion so as to have a small thickness. Pin 11 is provided on one side of sheet elastic member 3, and engagement hole portion 12 including a hole 12b is provided in a manner pivotable around a shaft 12a on the other side thereof. The part attachment member is attached to headlamp 30 with a bolt 19 by a mechanism described later.

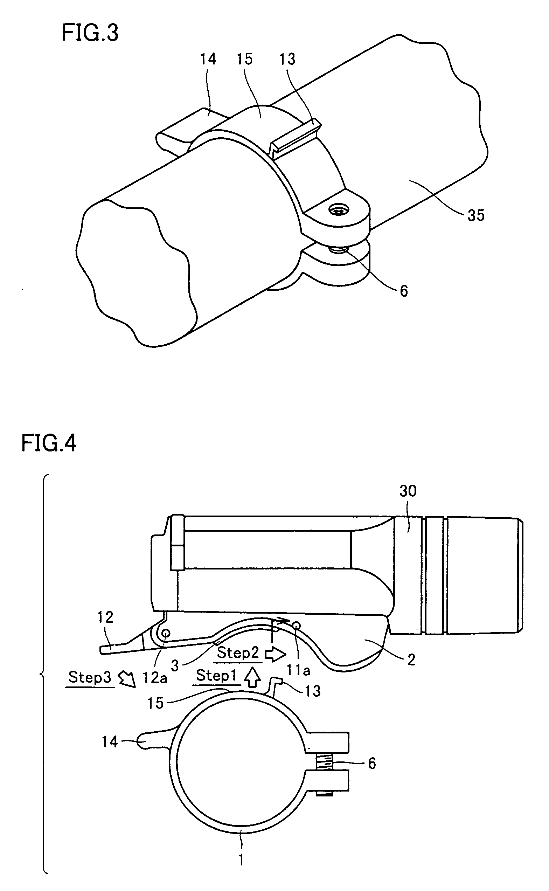

Fig. 3 is a perspective view showing target portion fixation member 1 fixed to a handlebar 35 with bolt 6 serving as a fastener. Target portion fixation member 1 includes an engagement hook portion 13 inserted above pin 11 described above, and a protrusion 14 inserted in and catching hole 12b in engagement hole portion 12 described above.

Fig. 4 illustrates a procedure for fixing part attachment member 2 to target portion fixation member 1 fixed to a not-shown handlebar. In actual, it is part attachment member 2 that is attached to target portion fixation member 1. Here, however, as a relative positional relation of these members should only be shown, a manner in which target portion fixation member 1 is attached to part attachment member 2 will be described. In Fig. 4, at step 1, a contacted portion 15 is pressed against sheet elastic member 3, so that hook member 13 of target portion fixation member 1 catches the pin of part attachment member 2.

Then, an upper portion of the hook member is inserted in a space immediately above the pin, such that target portion fixation member 1 is tilted relative to the part attachment member. The hook portion at a tip end of the hook member should have such a size that insertion thereof into the space above the pin is allowed. Engagement between the pin and the hook member attains a function as a fulcrum in a subsequent engagement operation. Thereafter, the contacted portion is pressed against the sheet elastic member while maintaining engagement between the pin and the hook member. Then, engagement hole member 12 is pivoted around shaft 12a and protrusion 14 of the target portion fixation member is engaged with an edge of the hole portion. When protrusion 14 of the target portion fixation member is engaged with the edge of engagement hole member 12, an engagement portion between pin 11 and hook member 13 attains a function as a fulcrum as described above.

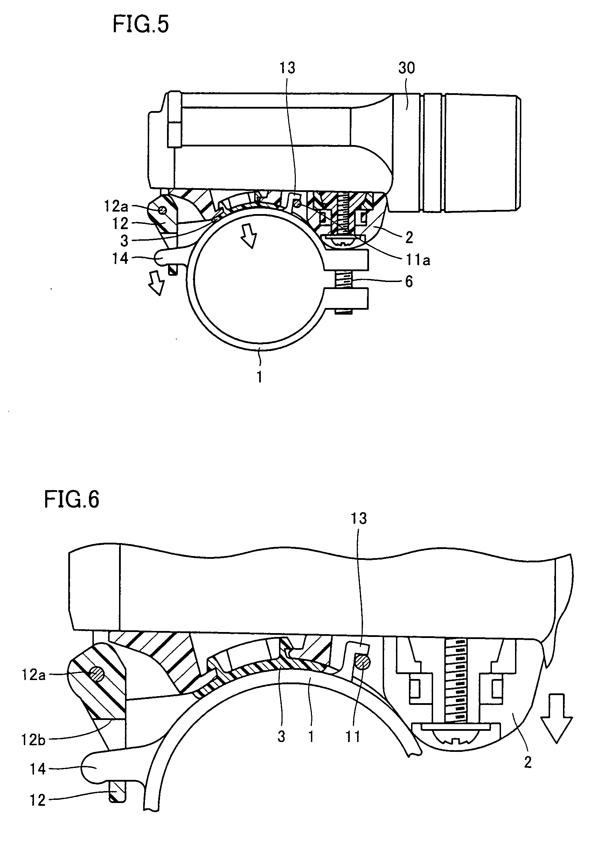

Fig. 5 illustrates a state in which part attachment member 2 is fixed to target portion fixation member 1 in accordance with the procedure described above. In the state shown in Fig. 5, sheet elastic member 3 applies a stress, which in turn causes repulsive force between target portion fixation member 1 and part attachment member 2. Accordingly, though target portion fixation member 1 tends to turn using the portion engaged with the pin as the fulcrum, target portion fixation member 1 cannot turn because protrusion 14 is engaged with the edge of the hole portion in the engagement hole member. Engagement is thus maintained in a stable manner.

Here, an operation to release engagement so as to detach part attachment member 2 having the headlamp attached from target portion fixation member 1 will be described. As shown in Fig. 6, it is necessary to release engagement between the pin and hook member 13. Engagement between engagement hole member 12 and protrusion 14 is readily released by moving engagement member 12 to the left (clockwise direction). Then, headlamp 30 is pressed forward (a direction in which the pin leaves the tip end portion of the hook member) in a manner resisting a friction force caused by elastic force of the sheet elastic member, and lifted upward, so that engagement between pin 11 and hook member 13 can be released. Whatever the manner of detachment may be, in order to release engagement between the members, it is necessary to compress sheet elastic member 3 to some extent. During normal running of a bicycle, however, a force large enough to release the engagement is not applied to the sheet elastic member. Therefore, stable attachment of the headlamp to the handlebar can be attained. Here, though a hook member having an inverted L shape has been shown as an example of the hook member in the drawing, a hook member of any shape such as of an inverted V shape may be employed in accordance with an elastic modulus or an amount of deformation in compression and deformation of the sheet elastic member, provided that firm engagement is maintained and detachment is not considerably difficult.

Referring to Fig. 6, sheet elastic member 3 has an inserted portion and a sheet portion, and is attached to part attachment member 2 by insertion of the inserted portion in a hole portion provided in part attachment member 2. The inserted portion has a hook-like portion to be engaged with the hole portion. Accordingly, if the inserted portion is once inserted, it is not readily detached.

The attachment apparatus described above has a significantly simplified structure, as compared with a conventional attachment apparatus, while attachment and fixation is firmly established. That is, an attachment operation is extremely simplified, and ensured attachment is achieved. In addition, as the structure is simple and the number of parts is not great, the apparatus can be manufactured with low cost.

The pin described above may be implemented by any member, such as an engagement member having a shape allowing engagement with the hook member serving as the third engagement member of the target portion fixation member. For example, a linear protrusion formed integrally with the part attachment member may be employed as the first engagement member, instead of the pin described above.

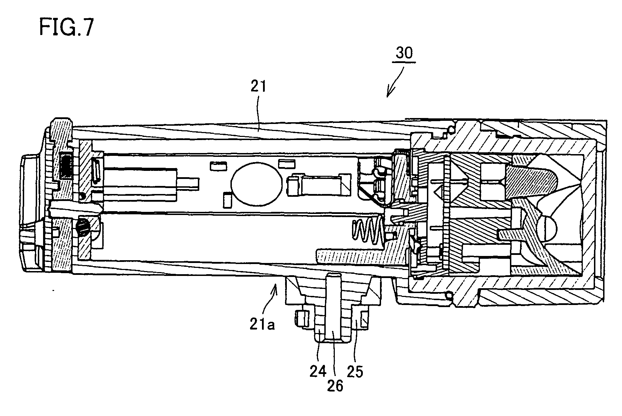

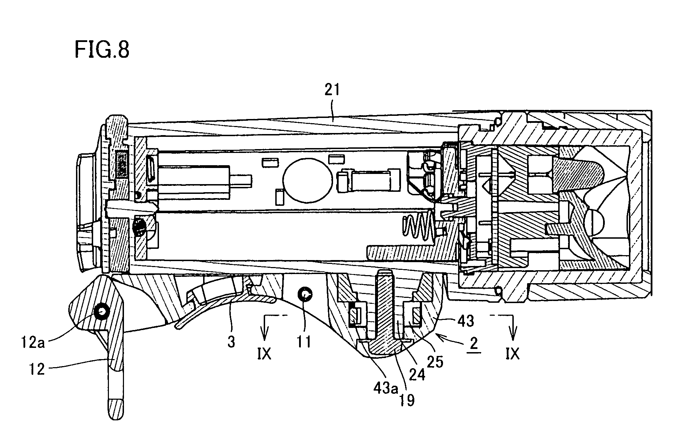

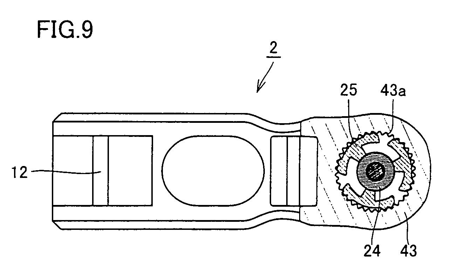

Fig. 7 illustrates a structure for attachment to the part attachment member, located in a bottom portion of the headlamp. Fig. 8 shows a state in which the headlamp is attached to the part attachment member, and Fig. 9 is a cross-sectional view along the line IX-IX in Fig. 8. On a bottom portion 21 a of a housing 21 of headlamp 30, an insertion shaft 24 inserted in part attachment member 2 is provided so as to project downward. A female thread 26 is cut inside insertion shaft 24. A disc-shaped engagement member 25 is fixed around an outer circumference of insertion shaft 24. In other words, engagement member 25 having a groove shallowly engaged with a groove on an inner circumferential surface of the part attachment member receiving insertion shaft 24 is fixed. A function of engagement member 25 will be described later.

In Fig. 8, insertion shaft 24 projecting from bottom portion 21 a of housing 21 is inserted in part attachment member 2 and fixed thereto with bolt 19. Bolt 19 is screwed into the insertion shaft, and a collar portion of the bolt attains a function to prevent a rotation shaft support member 43 from falling. Rotation shaft support member 43 or a support portion can turn around insertion member 24 and bolt 19.

Fig. 9 is a cross-sectional view along the line IX-IX in Fig. 8. Engagement member 25 is fixed to insertion shaft 24 projecting from the bottom portion of the housing such that cores thereof coincide. The engagement member consists of three partially annular portions, forming an incomplete circle. Support portions radially extend from insertion shaft 24 to respective partially annular portions for establishing connection therewith. On an outer surface of opposing end portions of the partially annular portion, grooves are formed along a direction of thickness respectively. Though the groove is engaged with a groove on the inner circumferential surface provided in an insertion recess portion in rotation shaft support portion 43 of part attachment member 2, this engagement is not strong. Here, strength of engagement is such that rotation with a finger is permitted and a projected portion of engagement member 25 is allowed to move to a next recessed groove on the inner circumferential surface. In other words, part attachment member 2 can rotate around rotation shaft 19, while receiving intermittent resistance. Such rotation is realized, with engagement and disengagement being repeated in a small angle pitch. By making smaller a depth of the groove in the inner circumferential surface, an angle defined by a support member and a illuminating apparatus supported by the support member can be set to an any angle, and the set angle can be maintained by engagement as described above.

In the following, embodiments of the present invention will be enumerated and described, including those that have been discussed above.

As described above, the sheet elastic member provided along the surface of the member may be employed as an elastic member.

According to such a structure, a structure simple in terms of design is achieved, while seeking functional beauty. In addition, the attachment apparatus can be structured without significant modification to a conventional member. Here, the sheet elastic member is not necessarily formed with a solid body in its entirety, and it may be implemented as a hollow sheet, for example.

As described above, the first engagement member in the part attachment member may be implemented by a pin, and the third engagement member in the target portion fixation member may be implemented by a hook member engaged with the pin.

According to such a structure, a deformation thickness of the elastic member may be modified in accordance with a depth of the hook, so that how readily the hook catches, or is detached from, the pin can be adjusted. Engagement between the pin and the hook described above is an operation initially performed in the attachment operation, and serves to provide a fulcrum when the second engagement member is engaged with the fourth engagement member.

As described above, the fourth engagement member in the target portion fixation member may be implemented by a protrusion protruding from the target portion fixation member, and the second engagement member in the part attachment member may be implemented by an engagement portion receiving the inserted protrusion for engagement.

According to such a structure, attachment is completed in a simplified manner. If a portion of the protrusion contacting with the receiving portion is provided with a recess, attachment is further strengthened.

As described above, the part discussed above may be implemented by a headlamp, and the headlamp may be attached to a part fixation portion in a pivotable manner.

According to such a structure, orientation of the headlamp can be adjusted.

As described above, the fixation target portion may be a handlebar of a bicycle. The target portion fixation member surrounds the handlebar, and it is fastened and fixed to the handlebar by the bolt serving as a fastener.

According to such a structure, the headlamp can be attached to the handlebar of the bicycle readily and firmly.

Though a structure to attach a headlamp to a bicycle has been described in the embodiment of the present invention, the embodiment of the present invention is not limited to the headlamp.

The attachment apparatus according to the present invention is expected to be widely used, mainly in bicycles, as an inexpensive apparatus attaining reduced number of parts and highly simplified structure, allowing easy and firm attachment, and maintaining the attached state in a stable manner.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An attachment apparatus comprising:
a target portion fixation member (1) fixed to a fixation target portion (35) with a fastener (6); and
a part attachment member (2) having an attachment target part (30) attached and fixed to said target portion fixation member (1); wherein
said part attachment member (2) has a portion contacting said target portion fixation member (1), and a first engagement member (11) and a second engagement member (12) located on one side and on another side respectively so that said contacting portion lies between the first engagement member and the second engagement member,
said target portion fixation member (1) has a contacted portion (15) contacted by said target portion fixation member (1), and a third engagement member (13) engaged with said first engagement member (11) and a fourth engagement member (14) engaged with said second engagement member (12) that are located on one side and on another side respectively so that said contacted portion (15) lies between the third engagement member and the fourth engagement member, and
at least one of the portion of said part attachment member (2) contacting said target portion fixation member (1) and said contacted portion (15) of said target portion fixation member (1) is provided with an elastic member (3) so as to contact with another portion.

2. The attachment apparatus according to claim 1, wherein
said elastic member (3) is implemented by a sheet elastic member (3) provided along a surface of a member.

3. The attachment apparatus according to claim 1 or 2, wherein
said first engagement member (11) in said part attachment member (2) is implemented by a pin (11), and said third engagement member (13) in said target portion fixation member (1) is implemented by a hook member (13) engaged with said pin (11).

4. The attachment apparatus according to one of claims 1 to 3, wherein
said fourth engagement member (14) in said target portion fixation member (1) is implemented by a protrusion (14) protruding from the target portion fixation member (1), and said second engagement member (12) in said part attachment member (2) is implemented by an engagement portion (12) receiving inserted said protrusion (14) for engagement.

5. The attachment apparatus according to one of claims 1 to 4, wherein
said part (30) is implemented by a headlamp, and attached to said part attachment member (2) in a pivotable manner.

6. The attachment apparatus according to one of claims 1 to 5, wherein
said fixation target portion (35) is implemented by a handlebar (35) of a bicycle, and said target portion fixation member (1) surrounds said handlebar (35) and is fastened and fixed to said handlebar (35) by means of a bolt (6) serving as said fastener (30).
